# EUROPÄISCHE PATENTANMELDUNG

(11) **EP 3 632 946 A2**
(43) Veröffentlichungstag der Anmeldung: **08.04.2020**
(21) Anmeldenummer: 19196615.9
(22) Anmeldetag: 11.09.2019
(51) Int. Cl.: C08G 18/02, C08G 18/12, C08G 18/28, C08G 18/48, C08G 18/73, C08G 18/79

(54) **ZUSAMMENSETZUNG ZUR HERSTELLUNG WÄRMEAUSHÄRTENDER POLYURETHANMASSEN**

(30) Priorität: 02.10.2018 DE 102018124332
(71) Anmelder: CeraCon GmbH, 97990 Weikersheim (DE)
(72) Erfinder: BRÜCK, Dr. Andreas, 80336 München (DE); KUKLA, Dr. Frank, 97082 Würzburg (DE)
(74) Vertreter: advotec.

(57) **Zusammenfassung**

Die Erfindung betrifft eine Zusammensetzung zur Herstellung wärmeaushärtender Polyurethanmassen, umfassend
- eine aliphatische Isocyanat-Komponente mit mindestens einem aliphatischen Polyisocyanat,
- eine Polyol-Komponente sowie
- eine Mono-Alkohol-Komponente, wobei die aliphatische Isocyanat-Komponente eine Funktionalität von ca. 3,2 ± 0,5 aufweist und die 20 Zusammensetzung einen NCO-Gehalt von ca. 1,5 - 3,0 Gew.-% aufweist.

## Beschreibung

Die vorliegende Erfindung betrifft eine Zusammensetzung zur Herstellung wärmeaushärtender Polyurethanmassen. Bei der erfindungsgemäßen Zusammensetzung handelt es sich insbesondere um ein sogenanntes Präpolymer für wärmeaushärtende, einkomponentige Polyurethanmassen. Die erfindungsgemäße Zusammensetzung kann unter Einbringung von Luft unter Druck physikalisch geschäumt werden. Dieses System findet Einsatz als weichelastischer, geschäumter Dicht- und Klebstoff im "Foamed in-place foam gasket"-Verfahren (FIPFG).

Aus dem Stand der Technik ist insbesondere bekannt, Dicht-, Kleb- und Vergussmassen auf Polyurethanbasis in einem zweikomponentigen System zu verarbeiten. Hierbei werden die Isocyanat-Komponente und die H-acide Komponente räumlich voneinander getrennt und erst kurz vor dem Auftrag in einer Mischeinheit zusammengeführt. Die Eigenschaften der Endprodukte können je nach Einsatzgebiet in einem weiten Bereich stark variiert werden (je nach Art der Rohstoffe, Additive und Füllstoffe). Zur genauen Abstimmung der Eigenschaften können in einem separaten Schritt reaktive (Quasi-)Präpolymere in einem vorgeschalteten Produktionsschritt hergestellt werden. Diese reaktiven NCO-Präpolymere werden üblicherweise aus Diisocyanaten, zwei- oder höher funktionellen Polyether- und/oder Polyesterpolyolen mittleren Molekulargewichts (von ca. 500 - 5000 g/mol) und optional kürzeren Kettenverlängerern (z.B. zwei- oder höherfunktionale Alkohole, Amine, Thiole) hergestellt. Als Isocyanat-Komponenten kommen im Stand der Technik in der Regel reaktive aromatische Verbindungen (z.B. MDI-Basis) zum Einsatz, die nach dem Auftrag schnell mit der zweiten Komponente (meist Polyole) reagieren. Sollen geschäumte Endprodukte entstehen, so wird der Polyol-Komponente üblicherweise Wasser zugesetzt, um Kohlendioxid als internes Treibgas zu generieren. Ein Nachteil dieser Schaumgenerierung besteht beispielsweise darin, dass ein gewisser Anteil an Isocyanat-Gruppen für die Umsetzung mit Wasser bereitgestellt werden muss. Dadurch ist der NCO-Gehalt derartiger, aus dem Stand der Technik bekannter Zusammensetzungen relativ hoch.

Aus hygienischen, gesundheitstechnischen und arbeitsschutzrechtlichen Gründen soll der Anteil an Monomeren der Isocyanat-Verbindungen gering gehalten werden. Dies gilt insbesondere, wenn toxische Verbindungen mit relativ geringem Dampfdruck, wie z.B. den aliphatischen Isocyanaten HDI, IPDI oder TMDI eingesetzt werden.

Aus dem Stand der Technik sind auch einkomponentige, wärmeaushärtende Systeme bekannt. So beschreibt EP 0757 067 B1 die Herstellung eines Härtersystems auf Diaminbasis für physikalisch schäumbare, wärmeaushärtende PUR-Systeme. Die verwendeten Präpolymere werden hierbei klassisch aus aromatischen Diisocyanaten und Polyether-Polyolen aufgebaut.

WO 1996006124 beschreibt die Darstellung von Präpolymeren aus monofunktionellen Alkoholen mit einer Kettenlänge von bis zu 36 C-Atomen sowie Polyisocyanaten. Diese Präpolymere finden Verwendung für reaktive Schmelzklebstoffe, Kaschierklebstoffe, reaktive Primer oder Schaumkunststoffe aus Einweg-Druckbehältern. Diese Präpolymere wurden vor allem für feuchtigkeitshärtende Systeme ausgelegt und basieren daher auf den reaktiven aromatischen Isocyanat-Systemen, wie z.B. Triphenylmethan-4, 4', 4"-Triisocyanat, Thiophosphorsäure-tris-(p-isocyanato-phenylester) oder höheren Homologen von Diphenylmethandiisocyanat (MDI) bzw. abgeleiteten Derivaten. Bei der Verwendung als feuchtigkeitsvernetzender Schaumkunststoff weist das in dieser Druckschrift beschriebene Präpolymer u.a. einen NCO-Gehalt zwischen 8 und 10 Gew.-% bei einer Viskosität von 5.000 - 200.000 mPa*s bei 25 °C auf. Die hier eingesetzten aromatischen Präpolymersysteme können maximal zu 50 % durch aliphatische Isocyanat-Verbindungen ersetzt werden.

US 20040147707 A1 beschreibt elastomere, nicht geschäumte Polyurethangele, welche aus Polyisocyanaten (z.B. MDI), 1 - 10 Gew.-% höher funktionellen Polyolen mit einer molaren Masse < 150 g/mol und Mono-Alkoholen als interne Weichmacher mit einem Anteil von mehr als 75 Gew.-% und einem Molekulargewicht > 1000 g/mol hergestellt werden. Ein NCO-haltiges, reaktives Präpolymer wird hierbei nicht als stabile Zwischenstufe isoliert.

WO 2007/107210 beschreibt vernetzte Polyurethanelastomere, dargestellt aus 30 - 80 Gew.-% Polyether- und/oder Polyesterdiolen, 10 - 40 Gew.-% eines höher funktionellen Polyols und 1 - 50 Gew.-% einer monofunktionellen Verbindung und einem trifunktionellen Isocyanat. Die reaktiven Verbindungen - optional in Kombination mit geeigneten Additiven und Füllstoffen - werden vermischt und direkt als ungeschäumte Masse z.B. zu ausgehärteten Formteilen verarbeitet.

Der vorliegenden Erfindung liegt die Aufgabe zugrunde, eine Zusammensetzung der eingangs genannten Art zur Verfügung zu stellen, welche die Nachteile der Zusammensetzungen aus dem Stand der Technik überwindet. Der Erfindung liegt insbesondere die Aufgabe zugrunde, eine Zusammensetzung zur Herstellung wärmeaushärtender Polyurethanmassen zur Verfügung zu stellen, mit welcher ein schnelles, definiertes Abreagieren mit wenig Volumenänderung möglich ist, und die zudem leicht verarbeitbar und möglichst gesundheitsverträglich ist.

Diese Aufgabe wird erfindungsgemäß durch eine Zusammensetzung der eingangs genannten Art gelöst, welche eine aliphatische Isocyanat-Komponente mit mindestens einem aliphatischen Polyisocyanat, eine Polyol-Komponente und eine Mono-Alkohol-Komponente umfasst, wobei die aliphatische Isocyanat-Komponente eine Funktionalität (Isocyanatfunktionalität) von ca. 3,2 ± 0,5 aufweist und die Zusammensetzung einen NCO-Gehalt (= Isocyanatgruppen-Gehalt) von ca. 1,5 - 3,0 % aufweist.

Es hat sich herausgestellt, dass sich die erfindungsgemäße Zusammensetzung durch eine überwiegend geschlossenzellige Schaumstruktur im abreagierten Zustand auszeichnet. Die erfindungsgemäße Zusammensetzung lässt sich leicht verarbeiten und ist wärmeaushärtend, sodass kein Treibmittel vonnöten ist. Bei der erfindungsgemäßen Zusammensetzung, bei der es sich um ein Präpolymer zur Herstellung wärmeaushärtender Polyurethanmassen handelt, handelt es sich zudem um ein Eintopfgemisch, welches bis zu fünf Monaten haltbar ist. Das erfindungsgemäße Gemisch kann im Arbeitseinsatz mit Luft über ein Ventil noch flüssig ausgebracht werden und härtet dann in einem Ofen innerhalb von fünf Minuten aus. Die erfindungsgemäße Zusammensetzung weist in der Regel eine Viskosität im Bereich von 50 - 200 Pa*s bei 20 °C (10 - 100 s⁻¹, ohne Lösungsmittel oder weniger flüchtige Verdünnungshilfen) auf, was eine optimale Verarbeitbarkeit gewährleistet. Die erfindungsgemäße Zusammensetzung ist zudem ohne Stabilisatoren physikalisch schäumbar. Der NCO-Gehalt der erfindungsgemäßen Zusammensetzung ist für ein schnelles und definiertes Abreagieren mit wenig Volumenänderung in der Anwendung äußerst vorteilhaft. Zudem ist die Einbringung einer festen Härterkomponente in eine temperaturempfindliche Formulierung bei gleichzeitig feiner Dispersion eine prozesstechnische Herausforderung. Dabei sind möglichst geringe Mengen der relativ teuren Härterkomponente vorteilhaft. Ein weiterer Vorteil gegenüber klassischen 2 K-PUR-Systemen ist die Wirtschaftlichkeit, da teure Isocyanat- und Härter-Anteile möglichst gering gehalten werden können.

Vorzugsweise ist die erfindungsgemäße Zusammensetzung frei von aromatischen Isocyanaten. Dadurch kann die starke Gesundheitsbelastung, welche bei Zusammensetzungen mit aromatischen Isocyanaten gegeben ist, eliminiert werden.

Die Polyisocyanate der erfindungsgemäßen Zusammensetzung sind vorzugsweise ausgewählt aus der Gruppe von symmetrischen und asymmetrischen Trimerisaten, insbesondere ausgehend von 1,6-Hexamethylendiisocyanat (HDI), 1,5-Pentamethylendiisocyanat (PDI) und Isophorondiisocyanat (IPDI) sowie deren Mischungen. Folgende Polyisocyanate sind hierbei besonders vorteilhaft:

**Tabelle 1**

| Grundstruktur | Produkt | Lieferform [%] | NCO-Gehalt [%] | Ca. Viskosität [mPa*s] bei 23°C | Ca. Funktionalität | Monomer-Anteil |
|---|---|---|---|---|---|---|
| | z.B. aus der Produktreihe Desmodur® der Fa. Covestro | | | | | |
| HDI-Isocyanurat | N 3300 | 100 | 21,8 ± 0,3 | 3000 | 3,4 | ≤ 0,15 |
| HDI-Isocyanurat | N 3600 | 100 | 23,0 ± 0,5 | 1200 | 3,1 | ≤ 0,5 |
| HDI-Biuret | N 3200 | 100 | 23,0 ± 0,5 | 2500 | 3,2 | ≤ 0,5 |
| HDI-Biuret | N 100 | 100 | 22,0 ± 0,3 | 10000 | 3,5 | - |
| HDI-Allophanat | N 3500 | 100 | ca. 19,5 | 35000 | (> 3,0) | ≤ 0,25 |
| PDI-Isocyanurate | Eco N 7300 | 100 | ca. 21,9 | 9500 | (> 3,0) | ≤ 0,3 |

| | z.B. aus der Produktreihe Vestanat® der Fa. Evonik | | | | | |
|---|---|---|---|---|---|---|
| HDI-Isocyanurat | HT 2500 LV | 100 | 23,0 ± 0,5 | 1200 | (ca. 3-4) | ≤ 0,25 |
| HDI-Isocyanurat | HT 2500/100 | 100 | 21,8 ± 0,3 | 3000 | (ca. 3-4) | < 0,1 |
| HDI-Isocyanurat | HT 2500 L | 90 | 19,6 ± 0,3 | 550 | (ca. 3-4) | < 0,1 |
| IPDI-Isocyanurat | T 1890/100 | 100 | ca. 17,3 | (Feststoff) | (ca. 3-4) | < 0,5 |
| IPDI-Isocyanurat | T 1890 (E/L/M) | 70%ig | ca. 12,0 | E: 900 | (ca. 3-4) | < 0,5 |
| | | | | L: 1700 | | |
| | | | | M: 4000 | | |

| | z.B. aus der Produktreihe Basonat® der Fa. BASF | | | | | |
|---|---|---|---|---|---|---|
| HDI-Isocyanurat | HI 100 | 100 | 22,0 ± 0,5 | ca. 3250 | (ca. 3-4) | < 0,3 |
| HDI-Isocyanurat | HI 2000 | 100 | 23,0 ± 0,5 | ca. 1200 | (ca. 3-4) | < 0,3 |

Die Polyol-Komponente der erfindungsgemäßen Zusammensetzung umfasst vorzugsweise langkettige Polyole mit einer mittleren molaren Masse von ca. 4.000 - ca. 20.000 g/mol, vorzugsweise ca. 11.000 g/mol und/oder mindestens einen Alkohol aus der Gruppe von Polypropylenoxidglykole oder Poly(propylenoxid-polyethylenoxid)glykole als Block- oder Copolymere mit einem mittleren Molekulargewicht von ca. 6000-23000 g/mol, wie zum Beispiel die Produkte der Fa. Covestro Acclaim® Polyol 8200 N (ca. 8000 g/mol), 12200 N (ca. 11200 g/mol), 18200 N (ca.17300 g/mol), 22200 N (ca. 22000 g/mol), Polybutadienglykole (1000 - 3000 g/mol), wie z.B. der Fa. BASF PolyTHF 1800 (ca. 1800 g/mol), PolyTHF 2000 (ca. 2000 g/mol), PolyTHF 2900 (ca. 2900 g/mol), Dihydroxyl-funktionalisierte Butadiene mit einem mittleren Molekulargewicht von 1000 - 11000 g/mol, wie z.B. die Produkte Polyvest® HT (ca. 2900 g/mol) von der Fa. Evonik, Kresol® LBH 2000 (ca. 2100 g/mol), LBH-P 2000 (ca. 2100 g/mol), LBH 3000 (ca. 3000 g/mol), LBH-P 3000 (ca. 3000 g/mol), LBH 5000 (ca. 5000 g/mol), Poly bd® R-45HT-LO (ca. 2800 g/mol), R-45V (ca. 2800 g/mol) von der Fa. Total (Cray Valley), und/oder mindestens ein Diol mit einem mittleren Molekulargewicht von ca. 1500 - 5000 g/mol.

Mit Vorteil enthält die Mono-Alkohol-Komponente der erfindungsgemäßen Zusammensetzung mindestens einen einwertigen Alkohol mit einer molaren Masse von ca. 1.000 - ca. 2.500 g/mol und/oder mindestens einen Alkohol aus der Gruppe von Alkyl-Polypropylenoxidglykole wie z.B. Butoxypolypropylenglykol (CAS: 9003-13-8) mit einem Molekulargewicht von 1000 - 3000 g/mol, wie z.B. Rokolub P-B-46 (ca. 1050 g/mol) von der Fa. PCC Rokita , Alkyl-Polypropylenoxid-Polyethylenoxid-glycole als Block oder Copolymere, sowie mono-funktionale (hydrierte) Flüssigbutadiene, wie z.B. Krasol® LBH 5000M (ca. 5000 g/mol), HLBH 5000M (ca. 5000 g/mol) von der Fa. Total (Cray Valley), wobei die Mono-Alkohol-Komponente vorzugsweise Polypropylenoxid-mono-n-butylglykol enthält.

Mit Vorteil enthält die erfindungsgemäße Zusammensetzung einen Anteil an freien Diisocyanaten von weniger als 0,1 Gew.-%, vorzugsweise 0 Gew.-%.

Die erfindungsgemäße Zusammensetzung weist (ohne Zusätze, wie z.B. Lösungsmittel) vorzugsweise eine Viskosität im Bereich von ca. 50 - ca. 200 Pa*s bei 20°C auf.

Die erfindungsgemäße Zusammensetzung kann zudem Katalysatoren für eine Katalyse der Reaktion zwischen den verwendeten Alkoholen und den verwendeten Polyisocyanaten enthalten. Geeignete Katalysatoren sind typische Polyurethankatalysatoren, wie z.B. tertiäre Amine wie Dimethylcyclohexylamin, Dicyclohexylmethylamin, Pentamethyldiethylentriamin, N-Ethylmorpholin, Dimethylpiperizin, N-Methylimidazol, 1,4-Dimethylpiperazin, 1,2-Dimethylimidazol, Bis(N,N dimethylaminoethyl)ether, 1,3-Bis(dimethylaminopropyl)harnstoff, 2,2' -Dimorpholinyldiethylether, Triethylendiamin.

Die vorliegende Erfindung betrifft ferner ein Verfahren zur Herstellung eines Präpolymers für die spätere Herstellung einer Polyurethanmasse, umfassend folgende Schritte:
a) Einfüllen von mindestens einem einwertigen Alkohol in ein temperierfähiges Reaktionsgefäß mit Rührwerk, Vakuum- und Inertgas-Anschluss;
b) Einfüllen mindestens eines Polyisocyanats in das Reaktionsgefäß;
c) Entgasung der Mischung durch Temperaturerhöhung, vorzugsweise auf ca. 60 - 110°C unter Rühren und Vakuum;
d) Zugabe einer Polyol-Komponente.

Mit Vorteil ist das Polyisocyanat ausgewählt aus der Gruppe von symmetrischen und asymmetrischen Trimerisaten, insbesondere ausgehend von 1,6-Hexamethylendiisocyanat (HDI), 1,5-Pentamethylendiisocyanat (PDI) und Isophorondiisocyanat (IPDI) sowie deren Mischungen. Vorzugsweise enthält die Polyol-Komponente beim erfindungsgemäßen Verfahren langkettige Polyole mit einer mittleren molaren Masse von ca. 4.000 - ca. 20.000 g/mol, vorzugsweise ca. 11.000 g/mol und/oder mindestens einen Alkohol aus der Gruppe von Polypropylenoxidglykol oder Poly(propylenoxid-polyethylenoxid)glykol als Block- oder Copolymere mit einem mittleren Molekulargewicht von ca. 6000 - 23000 g/mol, wie zum Beispiel die Produkte der Fa. Covestro Acclaim® Polyol 8200 N (ca. 8000 g/mol), 12200 N (ca. 11200 g/mol), 18200 N (ca.17300 g/mol), 22200 N (ca. 22000 g/mol), Polybutadienglykole (1000 - 3000 g/mol), wie z.B. der Fa. BASF, PolyTHF 1800 (ca. 1800 g/mol), PolyTHF 2000 (ca. 2000 g/mol), PolyTHF 2900 (ca. 2900 g/mol), Dihydroxyl-funktionalisierte Butadiene mit einem mittleren Molekulargewicht von 1000-11000 g/mol; wie z.B. die Produkte Polyvest® HT (ca. 2900 g/mol) von der Fa. Evonik, Kresol® LBH 2000 (ca. 2100 g/mol), LBH-P 2000 (ca. 2100 g/mol), LBH 3000 (ca. 3000 g/mol), LBH-P 3000 (ca. 3000 g/mol), LBH 5000 (ca. 5000 g/mol), Poly bd® R-45HTLO (ca. 2800 g/mol), R-45V (ca. 2800 g/mol) von der Fa. Total (Cray Valley), und/oder mindestens ein Diol mit einem mittleren Molekulargewicht von ca. 1500 - 5000 g/mol.

Vorzugsweise enthält die Mono-Alkohol-Komponente mindestens einen einwertigen Alkohol mit einer molaren Masse von ca. 1.000 - ca. 2.500 g/mol und/oder mindestens einen Alkohol aus der Gruppe der Alkyl-polypropylenoxidglykole, wie z.B. Butoxypolypropylenglykol (CAS: 9003-13-8), mit einem Molekulargewicht von 1000 - 3000 g/mol, wie z.B. Rokolub P-B-46 (ca. 1050 g/mol) von der Fa. PCC Rokita , Alkyl-polypropylenoxid-Polyethylenoxid-glycole als Block- oder Copolymere, sowie mono-funktionale (hydrierte) Flüssigbutadiene, wie z.B. Krasol® LBH 5000M (ca. 5000 g/mol), HLBH 5000M (ca. 5000 g/mol) von der Fa. Total (Cray Valley), wobei die Mono-Alkohol-Komponente vorzugsweise Polypropylenoxid-mono-n-butylglykol enthält.

Besonders bevorzugt verwendete Polyisocyanate sind folgende:

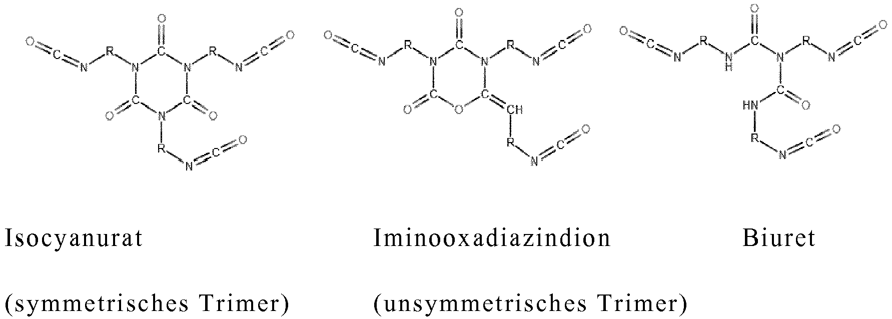

### Beispiele:

Allgemeine Vorgehensweise beim erfindungsgemäßen Verfahren:
In ein temperierfähiges Reaktionsgefäß mit Rührwerk, Vakuum- und Stickstoffanschluss werden bei Raumtemperatur das Polyisocyanat, der Mono-Alkohol und gegebenenfalls ein Katalysator eingefüllt. Die Mischung wird unter Rühren und Vakuum für ca. 30 Minuten entgast und dabei die Temperatur der Reaktionsmischung auf ca. 60 - ca. 110°C erhöht. Bei Erreichen der gewünschten Temperatur wird der Reaktionsraum mit Stickstoff geflutet und der Reaktionsfortschritt mittels NCO-Gehalt (Titration) und Viskositätsverlauf überwacht. Nach Ende der Reaktion wird das Diol zugegeben und die Reaktion abermals bis zur Beendigung verfolgt.

Folgende Varianten sind denkbar:
Gegebenenfalls muss der/die Alkohol(e) im Vakuum bei erhöhter Temperatur und Vakuum getrocknet werden. Gegebenenfalls werden Temperatur, der Katalysator und die Katalysatormenge je nach Mischung angepasst. Die Zugabe von Mono-Alkohol und Diol kann je nach Reaktionsbedingungen auf einmal, portionsweise oder tropfenweise zugegeben werden. Mono-Alkohol und Diol können auch gemeinsam oder in umgekehrter Reihenfolge zugegeben werden. Aufgrund mäßiger bis schlechter Löslichkeit ergibt die Reihenfolge 1. Mono-Alkohol und 2. Diol die besten reproduzierbaren Ergebnisse.

Folgende Hauptreaktionen können beim erfindungsgemäßen Verfahren stattfinden:

### 1. Reaktion von Trimerisat mit Mono-Alkohol:

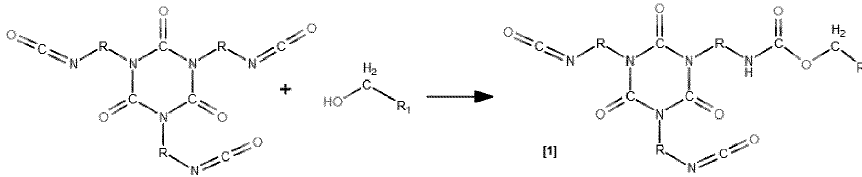

### Trimerisat mit Diol:

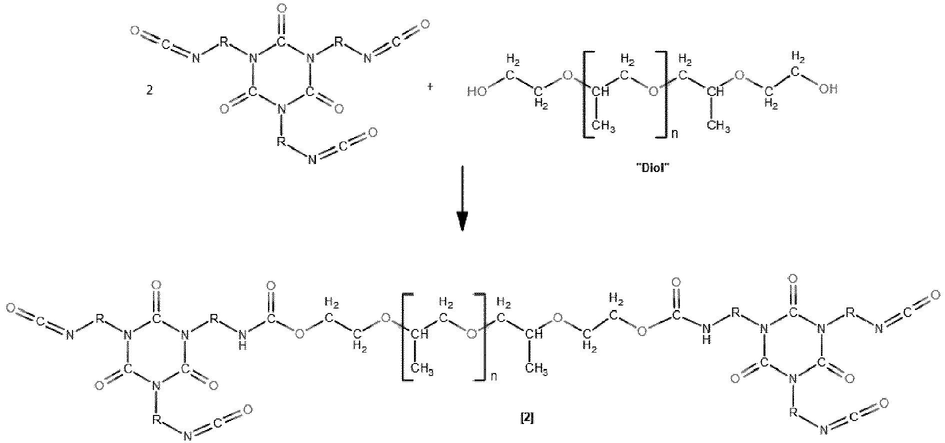

### Trimerisat mit 2 Mono-ol-Molekülen:

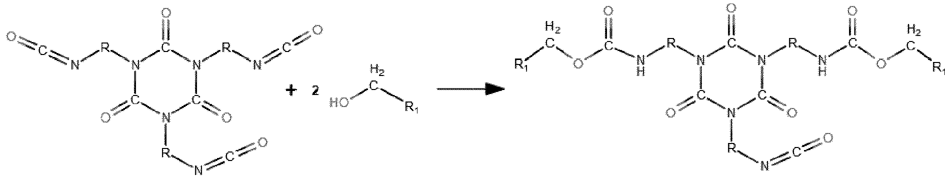

### [1] mit Diol und Trimerisat:

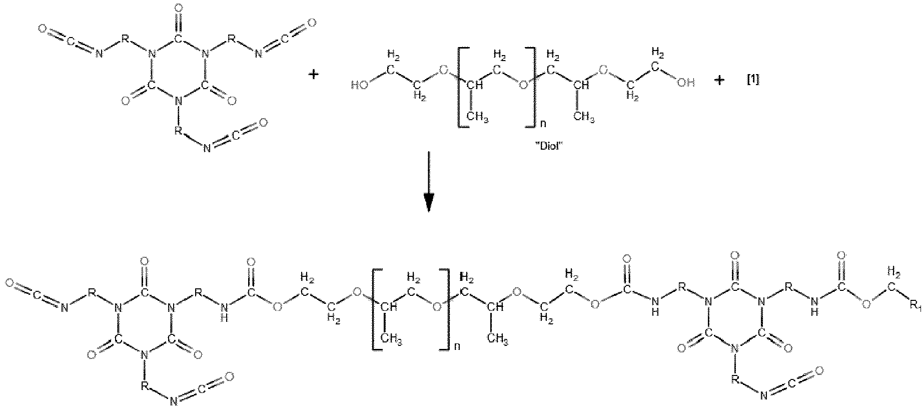

### 2 x [1] mit Diol:

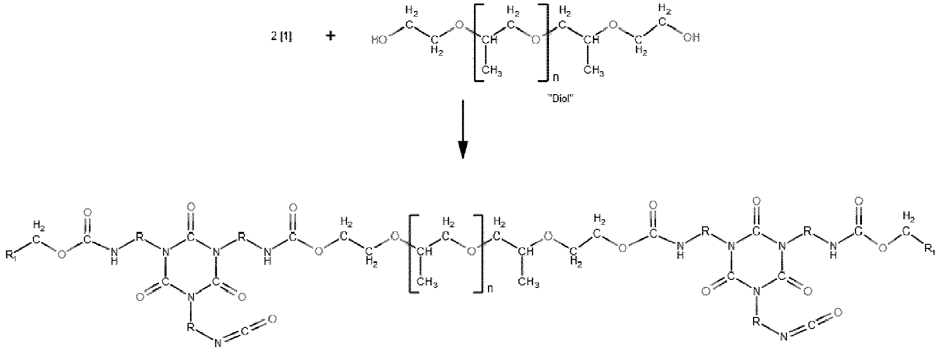

### [2] mit Diol und Trimerisat:

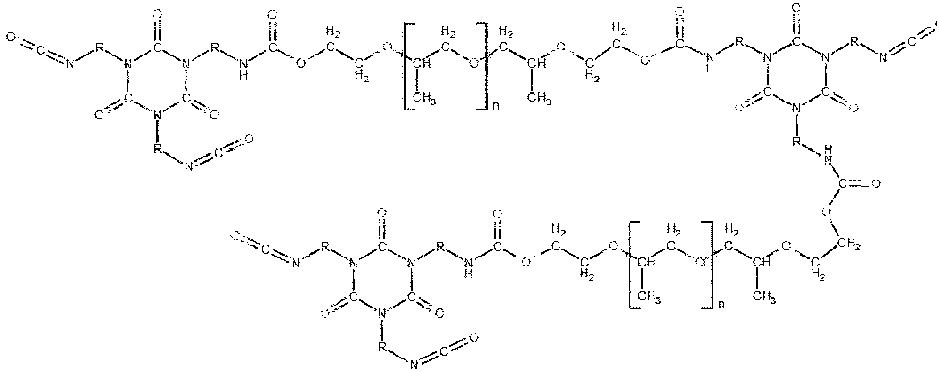

Konkretes Beispiel einer Präpolymerdarstellung:
4213 g von einem Butoxypolypropylenglykol (mittleres Molgewicht 1450 g/m, Fa. PCC) werden in einen heizbaren Rührkessel mit Vakuumanschluß eingewogen und eine Stunde bei 80°C im Vakuum entgast. Anschließend wird der Kessel mit Stickstoff begast und 1960 g eines HDI Isocyanurats (HT 2500 LV der Fa. Evonik) und 4,6 g DMDEE (Fa. Evonik) werden zugegeben. Danach wird die Reaktionsmischung für 10 Stunden bei 90°C Kessel-Innentemperatur gerührt, bzw. bis es in eine klare, durchsichtige Mischung übergegangen ist mit einem NCO-Gehalt von ca. 5,8 ± 0,3 %. Danach werden 6168 g eines Polypropylenoxid-glycols (Acclaim 12200 N der Fa. Covestro; mittleres Molgewicht = 11200 g/mol) zugegeben, die Mischung unter Rühren für 30 min langsam entgast und für weitere 18 Stunden bei 90°C unter Stickstoff gerührt. Nach Abkühlen erhält man ein Präpolymer mit einem NCO-Gehalt von ca. 2,04 % und einer Viskosität von 90,3 Pa*s (10 s-1, 20°C).

Die nachfolgende Tabelle 2 zeigt die Viskositäten verschiedener Zusammensetzungen zur Herstellung wärmeaushärtender Polyurethanmassen. Die beiden ersten Spalten zeigen Zusammensetzungen aus dem Stand der Technik. Die dritte und vierte Spalte zeigt Beispiele erfindungsgemäßer Zusammensetzungen. Insbesondere die vierte Spalte zeigt besonders vorteilhafte Zusammensetzungen mit einem NCO-Gehalt von 2,80 bzw. 1,90 Gew.-% sowie besonders vorteilhaften Viskositäten.

**Tabelle 2**

| | | | | |
|---|---|---|---|---|
| | HDI-Trimer [%] | 22,4 | 17,6 | |
| Dodecanol als | Mono-Alkohol [%] | 2,8 | 2,2 | |
| | Diol [%] | 74,8 | 80,2 | |
| | Gesamt | 100,0 | 100,0 | |
| Viskosität [Pa*s] | Scherrate 10 [1/s] | 98 | 204 | |
| | Scherrate 100 [1/s] | 92 | 175 | |
| | | | | |
| | NCO-% | 3,74 | 2,76 | |
| | HDI-Trimer [%] | 18,0 | 19,4 | 18,2 |
| Exxal 9 als *C9-Isomere* (technisch) | Mono-Alkohol [%] | 1,7 | 3,9 | 4,7 |
| | Diol [%] | 80,3 | 76,7 | 77,1 |
| | Gesamt | 100,0 | 100,0 | 100,0 |
| Viskosität [Pa*s] | Scherrate 10 [1/s] | 290 | 177 | 243 |
| | Scherrate 100 [1/s] | 228 | 159 | 203,4 |
| | | | | |
| | NCO-% | 2,64 | 2,65 | 2,09 |
| | HDI-Trimer [%] | 20,0 | 16,4 | 17,0 |
| n-Butyl-PPG als M = ca. 1050 g/mol | Mono-Alkohol [%] | 13,8 | 17,3 | 24,8 |
| | Diol [%] | 66,2 | 66,3 | 58,2 |
| | Gesamt | 100,0 | 100,0 | 100,0 |
| Viskosität [Pa*s] | Scherrate 10 [1/s] | 88 | 149 | 148 |
| | Scherrate 100 [1/s] | 85 | 133 | 124 |
| | NCO-% | 3,12 | 2,11 | 1,76 |
| *(weitere Zugabe führt zur Aushärtung)* | | | | |
| | HDI-Trimer [%] | 18,0 | 14,8 | 16,0 |
| n-Butyl-PPG als M = ca. 1450 g/mol | Mono-Alkohol [%] | 16,6 | 21,0 | 31,0 |
| | Diol [%] | 65,3 | 64,2 | 53,0 |
| | Gesamt | 100,0 | 100,0 | 100,0 |
| | | | | |
| Viskosität [Pa*s] | Scherrate 10 [1/s] | 108 | 250 | 99 |
| | Scherrate 100 [1/s] | 101,9 | 189 | 93 |
| | | | | |
| | NCO-% | 2,80 | 1,90 | 2,02 |

## Patentansprüche

1. Zusammensetzung zur Herstellung wärmeaushärtender Polyurethanmassen, umfassend
- eine aliphatische Isocyanat-Komponente mit mindestens einem aliphatischen Polyisocyanat,
- eine Polyol-Komponente sowie
- eine Mono-Alkohol-Komponente, wobei die aliphatische Isocyanat-Komponente eine Funktionalität von ca. 3,2 ± 0,5 aufweist und die Zusammensetzung einen NCO-Gehalt von ca. 1,5 - 3,0 Gew.-% aufweist.

2. Zusammensetzung nach Anspruch 1,
**dadurch gekennzeichnet,**
**dass** sie frei von aromatischen Isocyanaten ist.

3. Zusammensetzung nach einem der Ansprüche 1 oder 2,
**dadurch gekennzeichnet,**
**dass** die aliphatische Isocyanat-Komponente mindestens ein Polyisocyanat, ausgewählt aus der Gruppe von symmetrischen und asymmetrischen Trimerisaten, insbesondere ausgehend von 1,6-Hexamethylendiisocyanat (HDI), 1,5-Pentamethylendiisocyanat (PDI) und Isophorondiisocyanat (IPDI) sowie deren Mischungen, umfasst.

4. Zusammensetzung nach einem der vorhergehenden Ansprüche,
**dadurch gekennzeichnet,**
**dass** die Polyol-Komponente langkettige Polyole mit einer mittleren molaren Masse von ca. 4.000 - ca. 20.000 g/mol, vorzugsweise ca. 11.000 g/mol und/oder mindestens einen Alkohol aus der Gruppe von Polypropylenoxidglykol oder Poly(propylenoxid-polyethylenoxid)glykol als Block- oder Copolymere mit einem mittleren Molekulargewicht von ca. 6000 - 23000 g/mol, wie zum Beispiel die Produkte der Fa. Covestro Acclaim® Polyol 8200 N (ca. 8000 g/mol), 12200 N (ca. 11200 g/mol), 18200 N (ca.17300 g/mol), 22200 N (ca. 22000 g/mol), Polybutadienglykole (1000 - 3000 g/mol), wie z.B. der Fa. BASF, PolyTHF 1800 (ca. 1800 g/mol), PolyTHF 2000 (ca. 2000 g/mol), PolyTHF 2900 (ca. 2900 g/mol), Dihydroxyl-funktionalisierte Butadiene mit einem mittleren Molekulargewicht von 1000 - 11000 g/mol, wie z.B. die Produkte Polyvest® HT (ca. 2900 g/mol) von der Fa. Evonik, Kresol® LBH 2000 (ca. 2100 g/mol), LBH-P 2000 (ca. 2100 g/mol), LBH 3000 (ca. 3000 g/mol), LBH-P 3000 (ca. 3000 g/mol), LBH 5000 (ca. 5000 g/mol), Poly bd® R-45HTLO (ca. 2800 g/mol), R-45V (ca. 2800 g/mol) von der Fa. Total (Cray Valley), und/oder mindestens ein Diol mit einem mittleren Molekulargewicht von ca. 1500 - 5000 g/mol umfasst.

5. Zusammensetzung nach einem der vorhergehenden Ansprüche,
**dadurch gekennzeichnet,**
**dass** die Mono-Alkohol-Komponente mindestens einen einwertigen Alkohol mit einer molaren Masse von ca. 1.000 - ca. 2.500 g/mol und/oder mindestens einen Alkohol aus der Gruppe von Alkyl-Polypropylenoxidglykole, wie z.B. Butoxypolypropylenglykol (CAS: 9003-13-8) mit einem Molekulargewicht von 1000 - 3000 g/mol, wie z.B. Rokolub P-B-46 (ca. 1050 g/mol) von der Fa. PCC Rokita , Alkyl-Polypropylenoxid-Polyethylenoxid-glycole als Block- oder Copolymere, sowie mono-funktionale (hydrierte) Flüssigbutadiene, wie z.B. Krasol® LBH 5000M (ca. 5000 g/mol), HLBH 5000M (ca. 5000 g/mol) von der Fa. Total (Cray Valley), umfasst, wobei die Mono-Alkohol-Komponente vorzugsweise Polypropylenoxid-mono-n-butylglykol enthält.

6. Zusammensetzung nach einem der vorhergehenden Ansprüche,
**dadurch gekennzeichnet,**
**dass** sie einen Anteil an freien Diisocyanaten von weniger als 0,1 Gew.-%, vorzugsweise 0 Gew.-% enthält.

7. Zusammensetzung nach einem der vorhergehenden Ansprüche,
**dadurch gekennzeichnet,**
**dass** sie eine Viskosität im Bereich von 50 - 200 Pa*s bei 20 °C aufweist.

8. Zusammensetzung nach einem der vorhergehenden Ansprüche,
**dadurch gekennzeichnet,**
**dass** sie für physikalisch schäumbare, wärmevernetzende Polyurethanmassen geeignet ist.

9. Verfahren zur Herstellung eines Präpolymers für die spätere Herstellung einer Polyurethanmasse, umfassend folgende Schritte:
a) Einfüllen von mindestens einem einwertigen Alkohol in ein temperierfähiges Reaktionsgefäß mit Rührwerk, Vakuum- und Inertgas-Anschluss;
b) Einfüllen mindestens eines Polyisocyanats in das Reaktionsgefäß;
c) Entgasung der Mischung durch Temperaturerhöhung unter Rühren und Vakuum;
d) Zugabe einer Polyol-Komponente.

10. Verfahren nach Anspruch 9,
**dadurch gekennzeichnet,**
**dass** das Polyisocyanat ausgewählt ist aus der Gruppe von symmetrischen und asymmetrischen Trimerisaten, insbesondere ausgehend von 1,6-Hexamethylendiisocyanat (HDI), 1,5-Pentamethylendiisocyanat (PDI) und Isophorondiisocyanat (IPDI) sowie deren Mischungen.

11. Verfahren nach einem der Ansprüche 9 oder 10,
**dadurch gekennzeichnet,**
**dass** die Polyol-Komponente langkettige Polyole mit einer mittleren molaren Masse von ca. 4.000 - ca. 20.000 g/mol, vorzugsweise ca. 11.000 g/mol und/oder mindestens einen Alkohol aus der Gruppe von Polypropylenoxidglykol oder Poly(propylenoxid-polyethylenoxid)glykol als Block- oder Copolymere mit einem mittleren Molekulargewicht von ca. 6000 - 23000 g/mol, wie zum Beispiel die Produkte der Fa. Covestro Acclaim® Polyol 8200 N (ca. 8000 g/mol), 12200 N (ca. 11200 g/mol), 18200 N (ca.17300 g/mol), 22200 N (ca. 22000 g/mol), Polybutadienglykole (1000 - 3000 g/mol), wie z.B. der Fa. BASF, PolyTHF 1800 (ca. 1800 g/mol), PolyTHF 2000 (ca. 2000 g/mol), PolyTHF 2900 (ca. 2900 g/mol), Dihydroxyl-funktionalisierte Butadiene mit einem mittleren Molekulargewicht von 1000 - 11000 g/mol, wie z.B. die Produkte Polyvest® HT (ca. 2900 g/mol) von der Fa. Evonik, Kresol® LBH 2000 (ca. 2100 g/mol), LBH-P 2000 (ca. 2100 g/mol), LBH 3000 (ca. 3000 g/mol), LBH-P 3000 (ca. 3000 g/mol), LBH 5000 (ca. 5000 g/mol), Poly bd® R-45HTLO (ca. 2800 g/mol), R-45V (ca. 2800 g/mol) von der Fa. Total (Cray Valley), und/oder mindestens ein Diol mit einem mittleren Molekulargewicht von ca. 1500 - 5000 g/mol umfasst.

12. Verfahren nach einem der Ansprüche 9 bis 11,
**dadurch gekennzeichnet,**
**dass** die Mono-Alkohol-Komponente mindestens einen einwertigen A1-kohol mit einer molaren Masse von ca. 1.000 - ca. 2.500 g/mol und/oder mindestens einen Alkohol aus der Gruppe von Alkyl-Polypropylenoxidglykole, wie z.B. Butoxypolypropylenglykol (CAS: 9003-13-8) mit einem Molekulargewicht von 1000 - 3000 g/mol, wie z.B. Rokolub P-B-46 (ca. 1050 g/mol) von Fa. PCC Rokita , Alkyl-Polypropylenoxid-Polyethylenoxid-glycole als Block oder Copolymere, sowie mono-funktionale (hydrierte) Flüssigbutadiene, wie z.B. Krasol® LBH 5000M (ca. 5000 g/mol), HLBH 5000M (ca. 5000 g/mol) von der Fa. Total (Cray Valley) umfasst, wobei die Mono-Alkohol-Komponente vorzugsweise Polypropylenoxid-mono-n-butylglykol enthält.
